# EUROPEAN PATENT SPECIFICATION

(11) **EP 2 159 864 B1**
(45) Date of publication and mention of the grant of the patent: **24.10.2012**
(21) Application number: 09168661.8
(22) Date of filing: 26.08.2009
(51) Int. Cl.: H01M 2/22, H01M 10/42

(54) **Battery assembly**
Batterieanordnung
Ensemble de batterie

(30) Priority: 29.08.2008 US 93159 P; 22.12.2008 US 342041
(43) Date of publication of application: 03.03.2010
(73) Proprietor: Samsung SDI Co., Ltd., Gyeonggi-do (KR)
(72) Inventor: Jang, Youngcheol, Gyeonggi-do (KR); Kwak, Eunok, Gyeonggi-do (KR)
(74) Representative: Rasch, Dorit

(56) References cited:
- WO-A-2007/033689
- KR-A- 20080 016 050
- US-A- 5 578 397
- US-A1- 2008 152 994
- US-A1- 2009 155 632

## Description

### BACKGROUND OF THE DISCLOSURE

### Field of the Disclosure

The present disclosure relates to a battery assembly.

### Description of the Related Art

A lithium ion battery assembly may include a core pack constituted of a bare cell and a protection circuit module. The bare cell and protection circuit module are combined with each other by a lead plate when the core pack is manufactured.

The bare cell and lead plate are combined with each other usually by resistance welding or laser welding. However, the welding process itself may become an additional process that reduces manufacturing speed. In addition, defective products may be produced due to aligning error, etc. during the welding process.

KR 10 2008 0016050 A discloses a secondary battery, wherein a lead plate has a penetration hole so as to allow the lead plate to be fastened to a cap plate.

US2008/0152994 A1 discloses a battery pack, wherein a bent piece of a lead plate is soldered to a circuit board for connection. The lead plate rests upon the insulation cover having a protrusion extending into an open hole of the lead plate and thereby fitting the lead plate on the insulation cover.

### SUMMARY OF THE INVENTION

An object of the present disclosure is to provide a battery assembly that can improve coupling strength between a bare cell and a protection circuit module by combining a projected portion of a bare cell with a hole of a lead plate, and to simplify manufacturing process by removing welding process.

Additional advantages, objects and features of the disclosure will be set forth in part in the description which follows and in part will become apparent to those having ordinary skill in the art upon examination of the following or may be learned from practice of the disclosure.

According to the present invention there is provided a battery assembly comprising:
a bare cell having a cap plate that includes at least one projection;
a protection circuit module mounted to the cap plate wherein the protection circuit module includes at least one lead assembly that is coupled to the protection circuit module and wherein the at least one lead assembly defines an opening that is dimensioned to receive the at least one projection that extends outward from the cap plate so that the engagement between the openings of the at least one lead assembly and the at least one projection retains the protection circuit module to the cap plate in a spaced relationship, wherein the at least one projection comprises a first and a second projection and the at least one lead assembly comprises a first and a second lead assembly each having an opening that receives the first and second projections respectively and wherein at least one of the first and second lead assemblies electrically couple the protection circuit module to the cap plate.

The assembly further comprises a conductive adhesive that is applied between the projection of the cap plate and the opening in the lead assembly.

The at least one projection may extend outward from the first surface of the cap plate a first distance and the opening in the at least one lead assembly may have a depth that is selected so that the at least on projection extends out of the openings, wherein frictional engagement between the at least one projection and the inner walls of the openings in the at least one lead assembly couples the protection circuit module to the cap plate.

The at least one projection may also extend outward from the first surface of the cap plate a first distance and the opening in at least one lead assembly may have a depth that is selected so as to be substantially equal to or greater than the height of the at least one projection, wherein frictional engagement between the at least one projection and the inner walls of the openings in the at least one lead assembly couples the protection circuit module to the cap plate.

The at least one projection and the opening in the at least one lead assembly may be hexagonal in shape.

The cap plate may define a first surface and wherein the at least one projection is fixedly attached to the first surface of the cap plate so as to define a fixed first region adjacent the first surface of the cap plate and a fixed second region greater than the first region, wherein the first region is interposed between the second region and the cap plate so that at least one recess is formed between the second region and the first surface of the cap plate. The opening in the at least one lead assembly may be contoured so that the at least one lead assembly is positionable in the at least one recess so that the interaction between the second region of the at least one projection. The first and second regions of the projection may define a T-shaped cross section with two recesses, wherein the opening in the at least one assembly defines a partially enclosed opening with two sides so that the two sides can be positioned in the recess with the first region of the at least one projection positioned within the partially enclosed opening. The second region of the at least one projection may be either hexagonal or disk shaped.

The at least one projection may be formed of a deformable material so that the at least one projection extends through the opening in the at least one lead assembly and includes a portion that is deformed to overlie a region of the at least one lead assembly adjacent the opening so as to couple the lead assembly to the cap plate. An outer surface of the at least one lead assembly may be contoured in an area immediately adjacent the opening so as to define a reduced thickness area of the at least one lead assembly such that the at least one projection is deformed so as to fill the reduced thickness area.

The at least one projection may be formed of the same material as the cap plate.

As described above, the battery assembly according to the present disclosure produces the following effects.

First, the coupling strength between the bare cell and protection circuit module can be improved by combining the projected portion of the bare cell with the hole of the lead plate.

Second, the manufacturing process can be simplified by removing the welding process, thereby improving efficiency of the manufacturing process.

### BRIEF DESCRIPTION OF THE DRAWINGS

The above and other objects, features and advantages of the present disclosure will be more apparent from the following detailed description taken in conjunction with the accompanying drawings, in which:
FIG. 1 is an exploded view illustrating a battery assembly according to one embodiment of the present disclosure;
FIG. 2 is an exploded view illustrating a bare cell according to one embodiment of the present disclosure;
FIG. 3 is a front view illustrating the battery assembly;
FIGS. 4 and 5 are perspective views illustrating the battery assembly;
FIGS. 6 and 7 are perspective views illustrating a battery assembly according to another embodiment of the present disclosure;
FIGS. 8 to 11 are perspective views illustrating a battery assembly according to a still another embodiment of the present disclosure;
FIGS. 12 to 15 are perspective views illustrating a battery assembly according to a further still another embodiment of the present disclosure;
FIGS. 16 to 18 are sectional views illustrating a battery assembly according to a further still another embodiment of the present disclosure; and
FIGS. 19 to 21 are sectional views illustrating a battery assembly according to a further still another embodiment of the present disclosure.

### DETAILED DESCRIPTION OF THE DISCLOSURE

Hereinafter, preferred embodiments of the present disclosure will be described in detail with reference to the accompanying drawings. The aspects and features of the present disclosure and methods for achieving the aspects and features will be apparent by referring to the embodiments to be described in detail with reference to the accompanying drawings. In the entire description of the present disclosure, the same drawing reference numerals are used for the same elements across various figures.

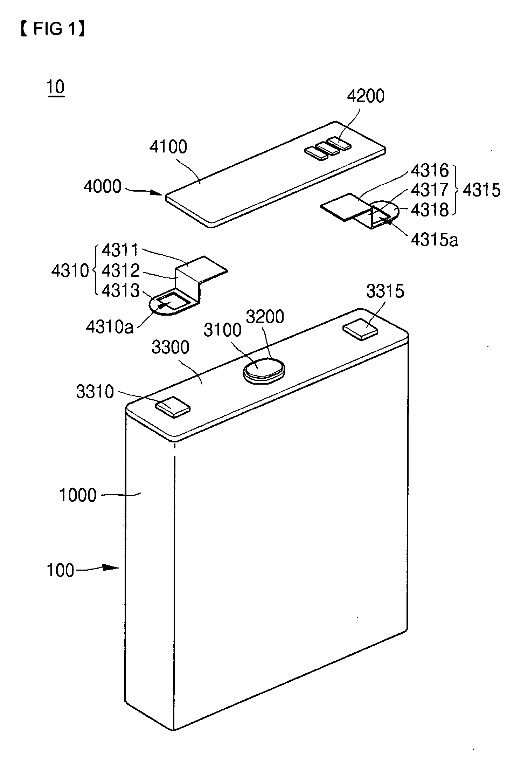

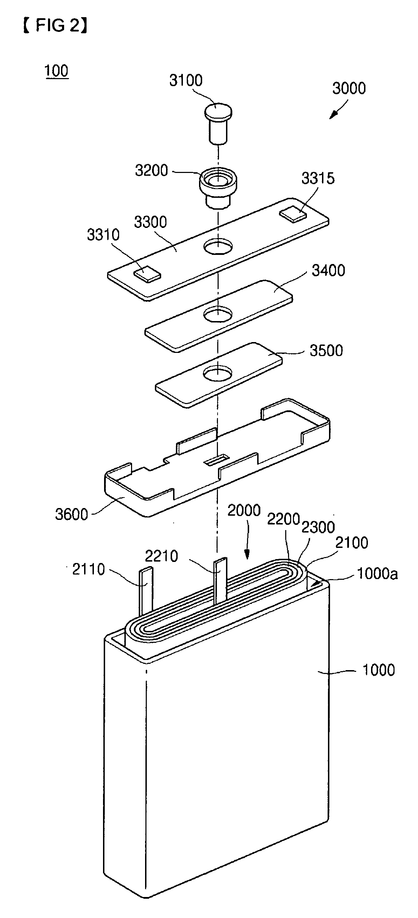

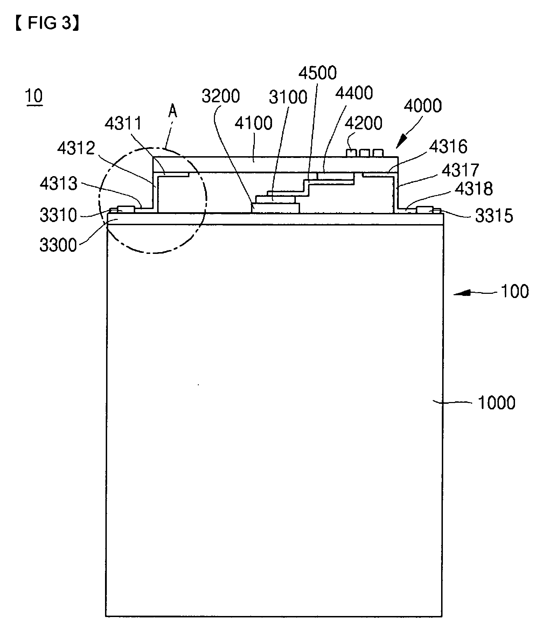

FIG. 1 is an exploded view illustrating a battery assembly 10 according to one embodiment of the present disclosure and FIG. 2 is an exploded view illustrating a bare cell 100 according to one embodiment of the present disclosure and FIG. 3 is a front view illustrating the battery assembly 10.

Referring to FIG. 1, the battery assembly 10 may include the bare cell 100 and a protection circuit module 4000. In addition, the battery assembly 10 may further include first and second lead plates 4310 and 4315 that couples the bare cell 100 and protection circuit module 4000 to each other electrically and mechanically.

Referring to FIGS. 1 and 2, the bare cell 100 may include a can 1000, an electrode assembly 2000 contained in the can 1000 and a cap assembly 3000 covering an opening 1000a of the can 1000.

The can 1000 has a roughly rectangular shape and may include the opening 1000a. The can 1000 may be made of metal and can function as a terminal in itself. The electrode assembly 2000 can be inserted into the can 1000 through the opening 1000a.

The electrode assembly 2000 includes first and second electrode plates 2100 and 2200 and a separator 2300. The electrode assembly 2000 may be formed by interposing the separator 2300 between the first and second electrode plates 2100 and 2200 and winding them in a jelly-roll type.

The first electrode plate 2100 may be formed of a first electrode collector (not shown) and a first electrode coating portion (not shown).

The first electrode collector is made of aluminum (Al) foil having excellent conductivity when the first electrode plate 2100 is a cathode.

The first electrode coating portion is provided on the first electrode collector and formed of a first electrode active material, conductive material and binder. The first electrode active material may be lithium cobalt oxide (LiCoO₂), lithium manganese oxide (LiMn₂O₄) or lithium nickel oxide (LiNiO₂). The conductive material may be carbon black. The binder may be PVDF, SBR or PTFE dissolved and dispersed in a volatile solvent such as NMP, an organic solvent or water.

Both ends of the first electrode collector are provided with a first electrode non-coating portion (not shown) where the first electrode coating portion is not formed. A first electrode tab 2110 is attached to the first electrode non-coating portion and projected toward the opening1000a of the can 1000. The first electrode tab 2110 may be made of aluminum. A first insulation tape (not shown) may be provided on the first electrode tab 2110 withdrawn out of the electrode assembly 2000 in order to prevent a short with parts other than the can 1000.

The second electrode plate 2200 may include a second electrode collector (not shown) and a second electrode coating portion (not shown).

The second electrode collector may be made of copper (Cu) foil having excellent conductivity when the second electrode plate 2200 is an anode.

The second electrode coating portion is provided on the second electrode collector and may be formed of a second electrode active material, conductive material and binder. The second electrode active material may be carbonic (C) material, Si, Sn, tin oxide, composite tin alloy, transition metal oxide, lithium metal nitride or lithium metal oxide. Typically, carbonic material may be used as the second electrode active material. The conductive material may be carbon black. The binder may be PVDF, SBR or PTFE dissolved and dispersed in a volatile solvent such as NMP, an organic solvent or water. The conductive material may not be used in the second electrode plate 2200 because conductivity of the second electrode active material itself is high.

Both ends of the second electrode collector are provided with a second electrode non-coating portion (not shown) where the second electrode coating portion is not formed. A second electrode tab 2210 is attached to the second electrode non-coating portion and projected toward the opening1000a of the can 1000. The second electrode tab 2210 may be made of copper (Cu) or nickel (Ni). A second insulation tape (not shown) may be provided on the second electrode tab 2210 withdrawn out of the electrode assembly 2000 to prevent a short with parts other than an electrode terminal 3100.

In the above description, there has been explained about that the first electrode plate 2100 is the cathode and the second electrode plate 2200 is the anode. However, the first electrode plate 2100 may be an anode and the second electrode plate 2200 may be a cathode. [0015] Generally, the can 1000 functioning as a terminal in the rectangular battery assembly 10 is a cathode. When the first electrode plate 2100 is a cathode, the outermost electrode plate of the jelly-roll electrode assembly 2000 may be the first electrode plate 2100 that is the cathode. In addition, when the first electrode plate 2100 is an anode, the outermost electrode plate of the jelly-roll electrode assembly 2000 may be the second electrode plate 2200 that is a cathode.

One embodiment will be explained below assuming that the first electrode plate 2100 is a cathode and the second electrode plate 2200 is an anode.

A separator 2300 may be a porous film made of polyethylene (PE), polypropylene (PP) or composite film thereof. The separator 2300 interrupts electron conduction between the first and second electrode plates 2100 and 2200 in the electrode assembly 2000 and allows lithium ions to move smoothly. The separator 2300 prevents contact between the first and second electrode plates 2100 and 2200 and also prevents temperature increase through shut-down, etc. when the temperature of the battery assembly 10 is increased by an external short

In the electrode assembly 2000, lithium ions move from the first electrode plate 2100 to the second electrode plate 2200 at the time of charging and are intercalated thereto. At the time of discharging, lithium ions are deintercalated from the second electrode plate 2200 to the first electrode plate 2100, thereby allowing voltage to be applied to an external electronic device.

The cap assembly 3000 includes an electrode terminal 3100, a gasket 3200, a cap plate 3300, an insulation plate 3400 and a terminal plate 3500. The cap assembly 3000 is combined with the electrode assembly 2000 at the opening 1000a of the can 1000 with an additional insulation case 3600, thereby sealing the can 1000. First and second projected portions 3310 and 3315 (or projection portions) may be provided at both ends of the cap plate 3300. The first and second projected portions 3310 and 3315 will be explained in detail later.

The electrode terminal 3100 is inserted through terminal holes of a gasket 3200, a cap plate 3300 and the insulation plate 3400 and terminal plate 3500 and may be electrically coupled to the first electrode tab 2110 of the electrode assembly 2000. Accordingly, the electrode terminal 3100 may be an anode terminal. The second electrode tab 2210 may be electrically coupled to any one side of the cap plate 3300 corresponding to the second electrode tab 2210.

Referring to FIGS. 1 and 3, the protection circuit module 4000 includes a circuit board 4100, a protection circuit unit (not shown), a charge/discharge terminal 4200, a PTC element 4400, first, second and third lead plates 4310, 4315 and 4500 (the first, second and third lead plates 4310, 4315 and 4500 define a lead assembly). In addition, the protection circuit module 4000 may include a conductive metal pattern (not shown) and an inspection terminal (not shown) on the circuit board 4100.

The protection circuit module 4000 is disposed on the cap plate 3300 and protects the battery from overcharge and overcurrent and prevents performance degradation due to over-discharge. Generally, the first, second and third lead plates 4310, 4315 and 4500 are not included in the protection circuit module 4000. However, in the present disclosure, the first, second and third lead plates 4310, 4315 and 4500 may be included in the protection circuit module 4000. Hereinafter, the description is explained that the first, second and third lead plates 4310, 4315 and 4500 are not included in the protection circuit module 4000.

The conductive metal pattern (not shown) and protection circuit unit are provided on the circuit board 4100 that may be stacked in plural number. The circuit board 4100 may be made of epoxy or bakelite based material. The conductive metal pattern may be electrically connected with protection circuit unit (not shown), the charge/discharge terminal 4200, the inspection terminal, the first, second and third lead plates 4310, 4315 and 4500.

The protection circuit, passive and active elements of the protection circuit unit (not shown) may be electrically coupled to the conductive metal pattern. The protection circuit checks information such as charge/discharge state, current, voltage and temperature of the battery in order to protect the battery.

The charge/discharge terminal 4200 is electrically coupled to the protection circuit unit and conductive metal pattern so as to provide an electrical path to an external electronic device.

The inspection terminal is electrically coupled to the protection circuit and conductive metal pattern so as to provide an electrical path through which normal operation of the protection circuit can be checked from the exterior.

The PTC (positive temperature coefficient) element 4400 is located under the circuit board 4100. The PTC element 4400 may be electrically coupled to an electrode terminal 3100 of the bare cell 100 through the third lead plate 4500. Electrical resistance of the PTC element 4400 is infinitely increased when the temperature of the battery assembly 10 exceeds a predetermined critical value. Accordingly, the PTC element 4400 can restrict current when the temperature of the battery assembly 10 exceeds the predetermined critical value.

Each of the first and second lead plates 4310 and 4315 electrically and mechanically couples the cap plate 3300 of the bare cell 100 to the protection circuit module 4000. Both of the first and second lead plates 4310 and 4315 may be cathode lead plates. When both of the first and second lead plates 4310 and 4315 are cathode lead plates, each of the first and second lead plates 4310 and 4315 electrically couples the bare cell 100 to the protection circuit module 4000. However, only any one of the first and second lead plates 4310 and 4315 may be a cathode lead plate and the other one may be a dummy lead plate. When any one of the first and second lead plates 4310 and 4315 is the dummy lead plate, the dummy lead plate connects mechanically the bare cell 100 to the protection circuit module 4000 and performs only function of keeping a gap between the bare cell 100 and protection circuit module 4000 and does not electrically couple the protection circuit module 4000 and bare cell 100 to each other. There will be explained below about the case where both of the first and second lead plates 4310 and 4315 are cathode lead plates. However, even when only any one of the first and second lead plates 4310 and 4315 is a cathode lead plate, the first and second lead plates 4310 and 4315 have the same construction except that conductive adhesive is applied to the cathode lead plate of them.

The first lead plate 4310 includes first, second and second plates 4311, 4312 and 4313, and the second lead plate 4315 includes first, second and second plates 4316, 4317 and 4318. More particularly, each of the first and second lead plates 4310 and 4315 includes the first plate 4311 or 4316 soldered to one side of the protection circuit module 4000, the third plate 4312 or 4317 to support a gap between the protection circuit module 4000 and bare cell 100, and the second plate 4313 or 4318 combined with the cap plate 3300 of the bare cell 100. The second plates 4313 and 4318 are provided with holes to be coupled to a projected portion of the cap plate 3300. The hole formed at the first lead plate 4310 is defined as a first hole 4310a (or first opening) and the hole formed at the second lead plate 4315 is defined as a second hole 4315a (or second opening). The first hole 4310a is electrically and mechanically coupled to a first projected portion 3310 of the cap plate 3300 and the second hole 4315a is electrically and mechanically coupled to a second projected portion 3315.

The third lead plate 4500 electrically couples the electrode terminal 3100 located over the bare cell 100 to the PTC element 4400 located under the protection circuit module 4000. The third lead plate 4500 may be an anode lead plate.

Coupling relationship between the first and second lead plates 4310 and 4315 and the cap plate 3300 will be explained in detail below. The first lead plate, first hole and first projected portion are structures corresponding to the second lead plate, second hole and second projected portion respectively. Accordingly, the coupling relationship between the first lead plate, first hole and first projected portion will be explained in detail below.

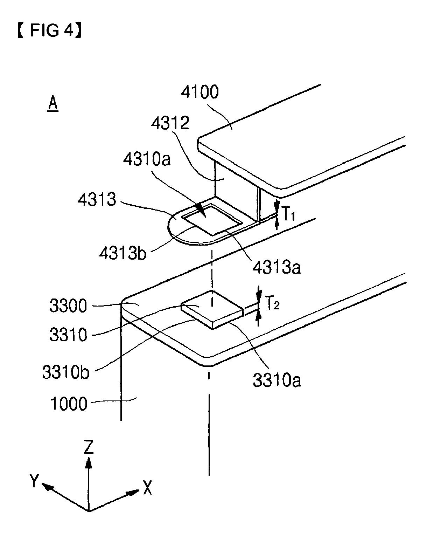

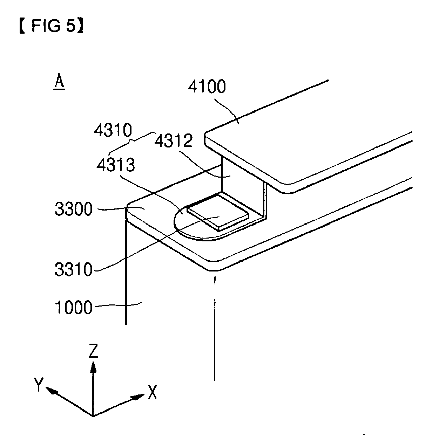

FIGS. 4 and 5 are perspective views illustrating the battery assembly 10 according to the embodiment, and more particularly, magnified views of "A" region of FIG. 3.

Referring to FIGS. 4 and 5, in the battery assembly 10, the first projected portion 3310 may be provided at one side of the cap plate 3300. The first projected portion 3310 may be extended from the one side portion of the cap plate 3300.The first projected portion 3310 may have a hexahedron shape such as cube or parallelepiped. However, there is no particular restriction on the shape as long as the first projected portion 3310 can be inserted into the hole. The first projected portion 3310 may be formed by pressing a lower part of the cap plate 3300 into a structure corresponding to the shape of the first projected portion 3310 at the position of the first projected portion 3310. On the other hand, the cap plate 3300 and first projected portion 3310 may be formed by one casting process using a mold having a shape of the first projected portion 3310. Therefore, the first projected portion 3310 is made of identical material with cap plate 3300.

As described above, the first lead plate 4310 includes the first plate 4311 soldered to one side of the protection circuit module 4000, the third plate 4312 supporting the gap between the protection circuit module 4000 and bare cell 100, and the second plate 4313 combined with the cap plate 3300 of the bare cell 100. The second plate 4313 of the first lead plate 4310 is provided with the first hole 4310a to receive and to be coupled to the first projected portion 3310 of the cap plate 3300. An opening of the first hole 4310a may have a hexahedron shape similar to the first projected portion 3310. The opening of the first hole 4310a may be located in the middle of the second plate 4313. The protection circuit module 4000 is fixed to the cap plate 3300 by the being combined first projected portion 3310 with the first hole 4310a.

The first projected portion 3310 may be inserted into the first hole 4310a. In this time, X-axis length 3310a and Y-axis length 3310b of the upper surface of the first projected portion 3310 are respectively the same as X-axis length 4313a and Y-axis length 4313b of the first hole 4310a. Thus, the first projected portion 3310 and first hole 4310a can united through the method of interference fit. The first projected portion 3310 and first hole 4310a are not separated from each other due to friction force after they are coupled to each other.

In addition, a thickness (T2) of the first projected portion 3310 may be larger than a thickness (T1) of the second plate 4313. Namely, the thickness of the first projected portion 3310 may be larger than a depth of the first hole 4310a. Accordingly, after the first projected portion 3310 and first hole 4310a are coupled to each other, the upper surface of the first projected portion 3310 is projected more than the upper surface of the second plate 4313, thereby preventing the first hole 4310a from being separated from the first projected portion 3310. Thus, coupling strength between the first lead plate 4310 and bare cell 100 can be improved.

In addition, the first projected portion 3310 and first hole 4310a may be coupled to each other after conductive adhesive is applied to the first projected portion 3310 and second plate 4313. The conductive adhesive increases electrical conductivity between the bare cell 100 and first lead plate 4310. Accordingly, electrical resistance between the bare cell 100 and protection circuit module 4000 is decreased and the first projected portion 3310 and first hole 4310a are more mechanically strongly coupled to each other.

In the battery assembly, the projected portions 3310 and 3315 of the bare cell 100 can be coupled to the first and second holes 4310a and 4315a of the first and second lead plates 4310 and 4315 through physical assemblage. Accordingly, the manufacturing process can be simplified and cost can be reduced by removing the conventional welding process to weld the lead plate to the cap plate of the bare cell.

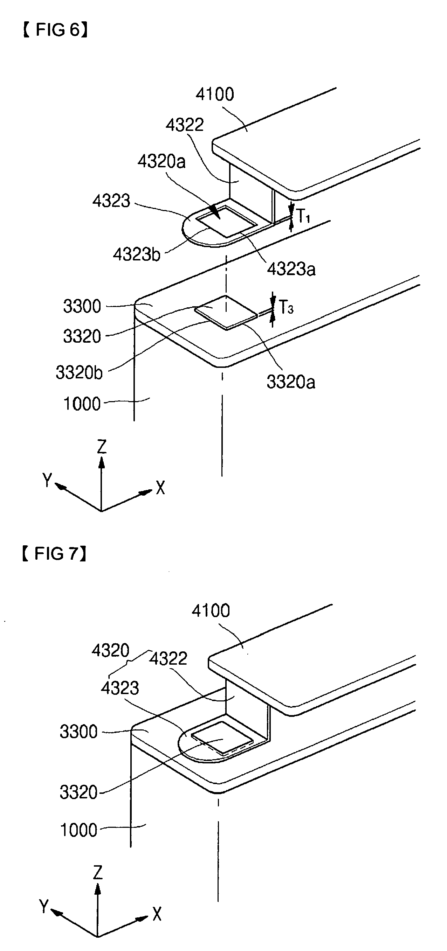

FIGS. 6 and 7 are perspective views illustrating a battery assembly 10 according to another embodiment of the present disclosure.

Referring to FIGS. 6 and 7, in the battery assembly 10, a first projected portion 3320 may be provided at one side of the cap plate 3300. The first projected portion 3320 may be made of aluminum (AI) similarly to the cap plate 3300. The first projected portion 3320 may have a hexahedron shape such as cube or parallelepiped. However, there is no particular restriction on the shape as long as the first projected portion 3320 can be inserted into the hole of the first lead plate.

As described above, the first lead plate includes a first plate soldered to one side of the protection circuit module 4000, a third plate 4322 keeping a gap between the protection circuit module 4000 and bare cell 100, and a second plate 4323 combined with the cap plate 3300 of the bare cell 100. The second plate 4323 of the first lead plate is provided with the first hole 4320a to be coupled to a first projected portion 3320 of the cap plate 3300. An opening of the first hole 4320a may have a hexahedron shape similar to the first projected portion 3320.

The first projected portion 3320 may be inserted into the first hole 4320a. In this time, X-axis length 3320a and Y-axis length 3320b of the upper surface of the first projected portion 3320 are respectively the same as X-axis length 4323a and Y-axis length 4323b of the first hole 4320a. Thus, the first projected portion 3310 and first hole 4310a can united through the method of interference fit. The first projected portion 3320 and first hole 4320a are not separated from each other due to friction force after they are coupled to each other.

In addition, a thickness (T3) of the first projected portion 3320 may be the same as a thickness (T1) of the second plate 4323 or smaller than a thickness (T1) of the second plate 4323. Namely, a thickness of the first projected portion 3320 may be same as a depth of the first hole 4320a or smaller than a depth of the first hole 4320a. Accordingly, after the first projected portion 3320 and first hole 4320a are coupled to each other, the upper surface of the first projected portion 3320 and the upper surface of the second plate 4323 are co-planar with each other. Accordingly, friction force is reduced when the first projected portion 3320 is inserted into the first hole 4320a and thus the first projected portion 3320 and first hole 4320a can be easily coupled to each other.

In addition, the first projected portion 3320 and first hole 4320a may be coupled to each other after conductive adhesive is applied to the first projected portion 3320 and second plate 4323. The conductive adhesive increases electrical conductivity between the bare cell 100 and first lead plate. Accordingly, electrical resistance between the bare cell 100 and protection circuit module 4000 is decreased and the first projected portion 3320 is more mechanically strongly coupled to first hole 4320a.

In the battery assembly, the first projected portion 3320 of the bare cell 100 can be coupled to the first hole 4320a of the lead plate through physical assemblage. Accordingly, the manufacturing process can be simplified and cost can be reduced by removing the conventional welding process to weld the lead plate to the cap plate of the bare cell.

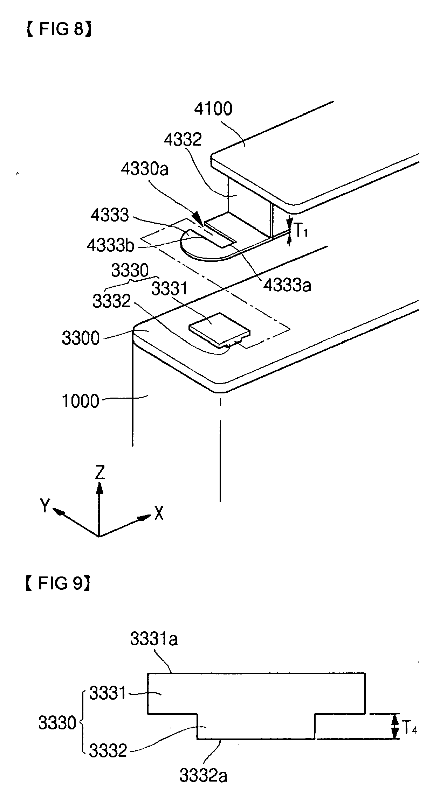

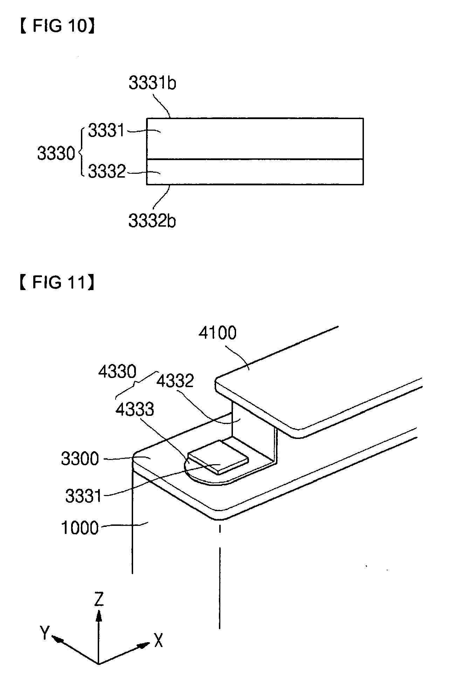

FIGS. 8 to 11 are perspective views illustrating a battery assembly 10 according to a still another embodiment of the present disclosure. More particularly FIGS. 9 and 10 are side views illustrating a first projected portion according to the embodiment when it is viewed in the directions of X and Y axes respectively.

Referring to FIGS. 8 to 11, the battery assembly 10 includes a first projected portion 3330 provided at one side of a cap plate 3300. The first projected portion 3330 may be made of aluminum (AI) similarly to the cap plate 3300. The first projected portion 3330 includes a first projection 3331 and a second projection 3332 that is located under the first projection 3331 and combined with the cap plate 3300. A sectional surface of the first projected portion 3330 may have a "T" shape when it is cut in the direction of X axis. Both of the first and second projections 3331 and 3332 have a hexahedron shape and the second projection 3332 is located in the middle of the first projection 3331. A Y-axis length 3332b of the second projection 3332 may be the same as a Y-axis length 3331 b of the first projection 3331, or longer or shorter. In addition, a X-axis length 3332a of the second projection 3332 may be shorter than a X-axis length 3331 a of the first projection 3331. Namely, one surface of the first projection 3331 may be formed sufficiently wide to cover a one surface of the second projection 3332 corresponding to the one surface of the first projection 3331.

The first lead plate includes a first plate soldered to one side of a protection circuit module 4000, a third plate 4332 keeping a gap between the protection circuit module 4000 and a bare cell 100, and a second plate 4333 combined with the cap plate 3300 of the bare cell 100. The second plate 4333 of the first lead plate is provided with a first hole 4330a to be coupled to the first projected portion 3330 of the cap plate 3300. An opening of the first hole 4330a may have a hexahedron shape similar to the first projected portion 3330. More particularly, the opening of the first hole 4330a may have a hexahedron shape similar to the first projection 3331. One side of the opening of the first hole 4330a may be contacted to one side of the second plate 4333.

The second projection 3332 of the first projected portion 3330 is combined with the first hole 4330a by sliding one side of the second projection 3332 into one side of the first hole 4330a. Some portion adjacent to the first hole 4330a in second plate 4333 may be disposed between the first projection 3331 and cap plate 3300. More particularly, the X-axis length 3332a and Y-axis length 3332b of the second projection 3332 are the same as the X-axis length 4333a and Y-axis length 4333b of the first hole 4330a. A thickness (T4) of the second projection 3332 is the same as a thickness (T1) of the second plate 4333. Accordingly, the second projection 3332 can be exactly combined with the first hole 4330a without error. When the second projection 3332 is combined with the first hole 4330a, the first projection 3331 is located on the second plate 4333. The X-axis length 3331 aof the first projection 3331 are longer than the X-axis length 4333aof the first hole 4330a. Accordingly, the first and second projections 3331 and 3332 are strongly engaged with the second plate 4333 through a locking structure. Thus, coupling strength between the first lead plate and bare cell 100 is improved.

In addition, the first projected portion 3330 and first hole 4330a may be coupled to each other after conductive adhesive is applied to the first projected portion 3330 and second plate 4333. The conductive adhesive increases electrical conductivity between the bare cell 100 and first lead plate. Accordingly, electrical resistance between the bare cell 100 and protection circuit module 4000 is decreased and the first projected portion 3330 is more mechanically strongly coupled to the first hole 4330a.

In the battery assembly, the first projected portion 3330 of the bare cell 100 can be coupled to the first hole 4330a of the lead plate through physical assemblage. Accordingly, the manufacturing process can be simplified and cost can be reduced by removing the conventional welding process to weld the lead plate to the cap plate of the bare cell.

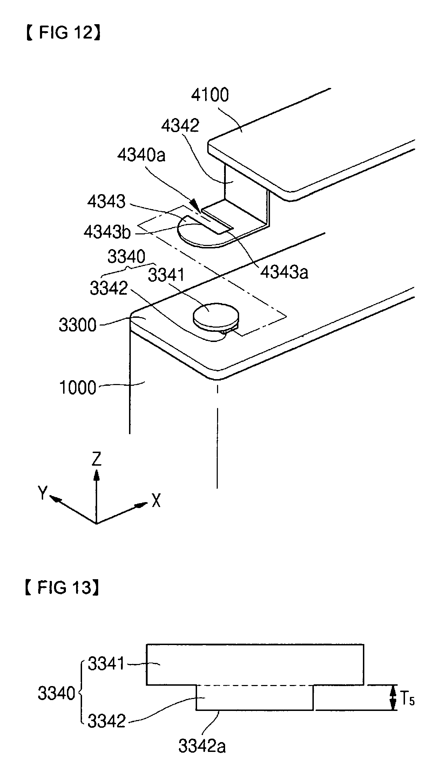

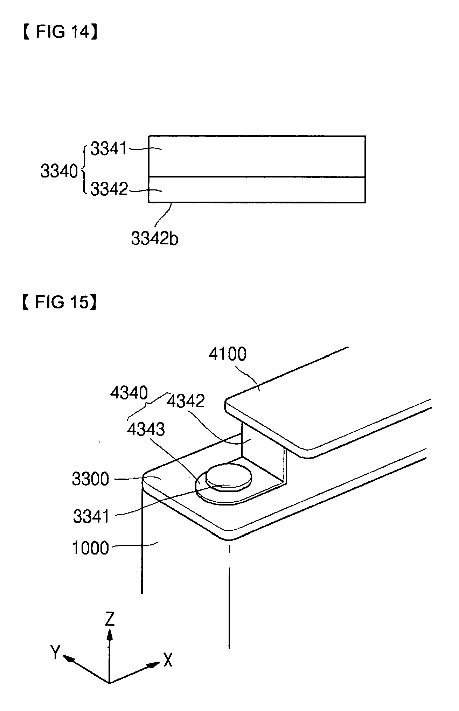

FIGS. 12 to 15 are perspective views illustrating a battery assembly 10 according to a further still another embodiment of the present disclosure. More particularly, FIGS. 13 and 14 are side views illustrating a first projected portion according to the embodiment when it is viewed in the directions of X and Y axes respectively.

Referring to FIGS. 12 to 15, the battery assembly 10 includes a first projected portion 3340 provided at one side of a cap plate 3300. The first projected portion 3340 may be made of aluminum (Al) similarly to the cap plate 3300. The first projected portion 3340 includes a first projection 3341 and a second projection 3342 that is located under the first projection 3341 and combined with the cap plate 3300. A sectional surface of the first projected portion 3340 may have a "T" shape when it is cut in the direction of X axis. The first projection 3341 has a disc shape and the second projection 3342 has a hexahedron shape. The second projection 3342 is located in the middle of the first projection 3341. A Y-axis length 3341 b of the first projection 3341 may be the same as a diameter of the second projection 3342, or longer or shorter. In addition, a diameter of the first projection 3341 is larger than an X-axis length 3342a of the second projection 3342. Namely, one surface of the first projection 3341 may be formed sufficiently wide to cover a one surface of the second projection 3342 corresponding to the one surface of the first projection 3341.

The first lead plate includes a first plate soldered to one side of a protection circuit module 4000, a third plate keeping a gap between the protection circuit module 4000 and a bare cell 100, and a second plate 4343 combined with the cap plate 3300 of the bare cell 100. The second plate 4343 of the first lead plate is provided with a first hole 4340a to be coupled to the first projected portion 3340 of the cap plate 3300. An opening of the first hole 4340a may also have a hexahedron shape similar to the first projected portion 3340. More particularly, the opening of the first hole 4340a may have a hexahedron shape similar to the first projection 3341. One side of the opening of the first hole 4340a may be contacted to one side of the second plate 4343.

The second projection 3342 of the first projected portion 3340 is combined with the first hole 4340a by sliding one side of the second projection 3342 into one side of the first hole 4340a. Some portion adjacent to the first hole 4340a in second plate 4343 may be disposed between the first projection 3341 and cap plate 3300. More particularly, the X-axis length 3342a and Y-axis length 3342b of the second projection 3342 are the same as the X-axis length 4343a and Y-axis length 4343b of the first hole 4340a. A thickness (T5) of the second projection 3342 is the same as a thickness (T1) of the first hole 4340a. Accordingly, the second projection 3342 can be exactly combined with the first hole 4340a without error. When the second projection 3342 is combined with the first hole 4340a, the first projection 3341 is located on the second plate 4343. A diameter of the first projection 3341 is longer than the X-axis length 4343a of the first hole 4340a. Accordingly, the first and second projections 3341 and 3342 are strongly engaged with the second plate 4343 through a locking structure. Thus, coupling strength between the first lead plate and bare cell 100 is improved.

In addition, the first projected portion 3340 and first hole 4340a may be coupled to each other after conductive adhesive is applied to the first projected portion 3340 and second plate 4343. The conductive adhesive increases electrical conductivity between the bare cell 100 and first lead plate. Accordingly, electrical resistance between the bare cell 100 and protection circuit module 4000 is decreased and the first projected portion 3340 is more mechanically strongly coupled to the first hole 4340a.

In the battery assembly, the first projected portion 3340 of the bare cell 100 can be coupled to the first hole 4340a of the lead plate through physical assemblage. Accordingly, the manufacturing process can be simplified and cost can be reduced by removing the conventional welding process to weld the lead plate to the cap plate of the bare cell.

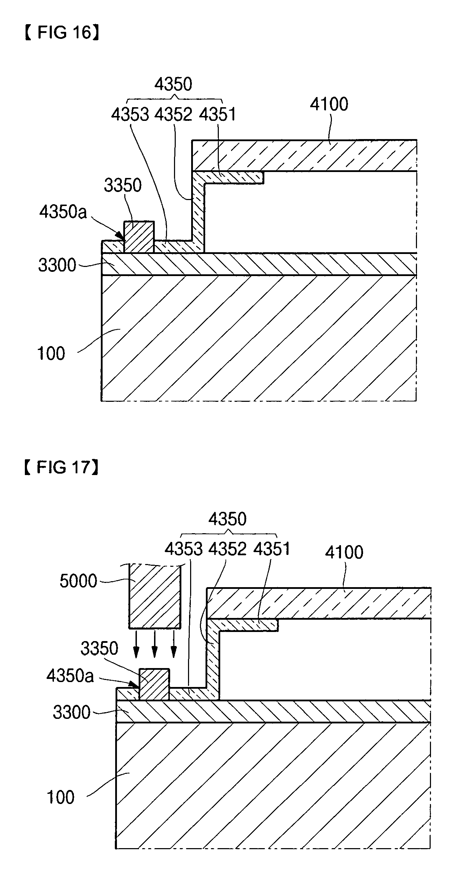

FIGS. 16 to 18 are sectional views illustrating a battery assembly according to a further still another embodiment of the present disclosure.

Referring to FIGS. 16 to 18, the battery assembly 10 includes a first projected portion 3350 provided at one side of a cap plate 3300. The first projected portion 3350 may be made of aluminum (Al) similarly to the cap plate 3300. The first projected portion 3350 may have a hexahedron shape such as cube or parallelepiped, or a cylindrical shape.

The first lead plate 4350 includes a first plate 4351 soldered to one side of a protection circuit module 4000, a third plate 4352 keeping a gap between the protection circuit module 4000 and a bare cell 100, and a second plate 4353 combined with the cap plate 3300 of the bare cell 100. The second plate 4353 of the first lead plate 4350 is provided with a first hole 4350a to be coupled to the first projected portion 3350 of the cap plate 3300. An opening of the first hole 4350a may also have a hexahedron or a cylindrical shape similar to the first projected portion 3350.

The first projected portion 3350 is thicker than the second plate 4353. Accordingly, after the first projected portion 3350 and first hole 4350a are combined with each other, the upper surface of the first projected portion 3350 is projected over the upper surface of the second plate 4353.

Then, an upper part of the first projected portion 3350 is pressurized toward a lower part of the bare cell by a press. The first projected portion 3350 has excellent flexibility and malleability because it is made of aluminum. Accordingly, the first projected portion 3350 can be pressed around the first hole 4350a. Namely, some portion of the first projected portion 3350 projected from the first hole 4350a may be formed to some portion of the first lead plate 4350 adjacent the first hole 4350a by pressing.

Thus, the upper part of the first projected portion 3350 is flatly pressed by the press and a predetermined portion of the first projected portion 3350 is formed on the second plate 4353. After the first projected portion 3350 is pressed by the press, the first projected portion 3350 includes a first projection 3351 located on the second plate 4353 and a second projection 3352 located in the first hole 4350a.

By the above structure, the first and second projections 3351 and 3352 are strongly engaged with the second plate 4353 through a locking structure. Thus, coupling strength between the first lead plate 4350 and bare cell 100 is improved.

The first projected portion 3350 and first hole 4350a may be coupled to each other after conductive adhesive is applied to the first projected portion 3350 and second plate 4353. The conductive adhesive increases electrical conductivity between the bare cell 100 and first lead plate 4350. Accordingly, electrical resistance between the bare cell 100 and protection circuit module 4000 is decreased and the first projected portion 3350 is more mechanically strongly coupled to the first hole 4350a.

In the battery assembly, the first projected portion 3350 of the bare cell 100 can be coupled to the first hole 4350a of the lead plate through physical assemblage. Accordingly, the manufacturing process can be simplified and cost can be reduced by removing the conventional welding process to weld the lead plate to the cap plate of the bare cell.

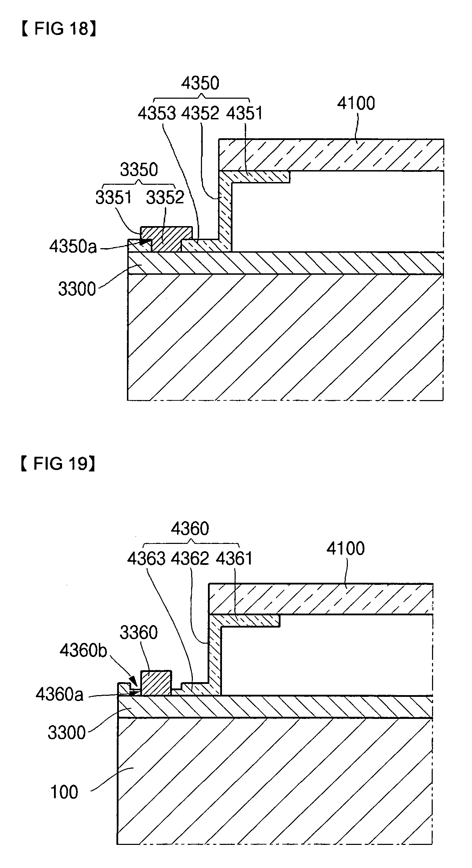

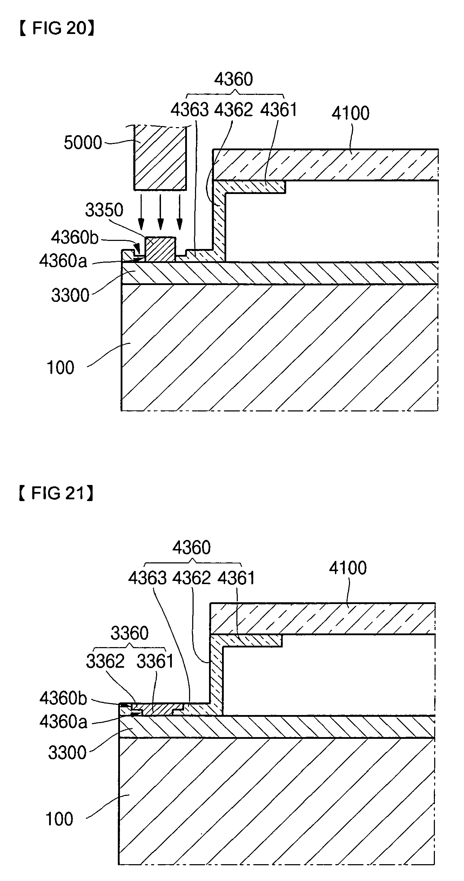

FIGS. 19 to 21 are sectional views illustrating a battery assembly according to a further still another embodiment of the present disclosure.

Referring to FIGS. 19 to 21, the battery assembly includes a first projected portion 3360 provided at one side of a cap plate 3300. The first projected portion 3360 may be made of aluminum similarly to the cap plate 3300. The first projected portion 3360 may have a hexahedron shape such as cube or parallelepiped, or a cylindrical shape.

The first lead plate 4360 includes a first plate 4361 soldered to one side of a protection circuit module 4000, a third plate 4362 keeping a gap between the protection circuit module 4000 and a bare cell 100, and a second plate 4363 combined with the cap plate 3300 of the bare cell 100. The second plate 4363 of the first lead plate 4360 is provided with a first hole 4360a and a first subhole 4360b on the first hole 4360a . The first hole 4360a and a first subhole 4360b are coupled to the first projected portion 3360 of the cap plate 3300. The second plate of the first lead plate is provided with a second hole and a second subhole and that are coupled to the first projected portion of the cap plate. A width of the first hole 4360a may be the same as a width of the first projected portion 3360 and a width of the first subhole 4360b may be larger than a width of the first hole 4360a. An opening of the first hole 4360a may also have a hexahedron or a cylindrical shape similar to the first projected portion 3360.

A thickness of the first projected portion 3360 is larger than a thickness of the second plate 4363. Accordingly, after the first projected portion 3360 and first hole 4360a are combined with each other, the upper surface of the first projected portion 3360 is projected over the upper surface of the second plate 4363.

Then, an upper part of the first projected portion 3360 is pressurized toward a lower part of the bare cell by a press. The first projected portion 3360 has excellent flexibility and malleability because it is made of aluminum. Accordingly, the first projected portion 3360 can be pressed around the first hole 4360a.

Thus, the upper part of the first projected portion 3360 is flatly pressed by the press and a predetermined portion of the first projected portion 3360 is also formed on a portion of the first subhole 4360b that is not combined with the first projected portion 3360. After the first projected portion 3360 is pressed by the press, the first projected portion 3360 includes a first projection 3361 located in the first subhole 4360b and a second projection 3362 located in the first hole 4360a.

By the above structure, the first and second projections 3361 and 3362 are strongly engaged with the second plate 4363 through a locking structure. Thus, coupling strength between the first lead plate 4360 and bare cell 100 is improved.

The first projected portion 3360 and first hole 4360a may be coupled to each other after conductive adhesive is applied to the first projected portion 3360 and second plate 4363. The conductive adhesive increases electrical conductivity between the bare cell 100 and first lead plate 4360. Accordingly, electrical resistance between the bare cell 100 and protection circuit module 4000 is decreased and the first projected portion 3360 is more mechanically strongly coupled to the first hole 4360a.

In the battery assembly, the first projected portion 3360 of the bare cell 100 can be coupled to the first hole 4350a of the lead plate through physical assemblage. Accordingly, the manufacturing process can be simplified and cost can be reduced by removing the conventional welding process to weld the lead plate to the cap plate of the bare cell.

## Claims

1. A battery assembly (10) comprising:
a bare cell (100) having a cap plate (3300) that includes at least one projection (3310);
a protection circuit module (4000) mounted to the cap plate wherein the protection circuit module includes at least one lead assembly that is coupled to the protection circuit module and wherein the at least one lead assembly defines an opening (4310a) that is dimensioned to receive the at least one projection that extends outward from the cap plate so that the engagement between the openings of the at least one lead assembly and the at least one projection retains the protection circuit module to the cap plate in a spaced relationship,
wherein the at least one projection comprises a first and a second projection and the at least one lead assembly comprises a first and a second lead assembly each having an opening that receives the first and second projections respectively and
wherein at least one of the first and second lead assemblies electrically couple the protection circuit module to the cap plate; and
a conductive adhesive that is applied between the projection of the cap plate and the opening in the lead assembly.

2. The assembly of Claim 1, wherein the at least one projection extend outward from the first surface of the cap plate a first distance and wherein the opening in the at least one lead assembly has a depth that is selected so that the at least on projection extends out of the openings and wherein frictional engagement between the at least one projection and the inner walls of the openings in the at least one lead assembly couples the protection circuit module to the cap plate.

3. The assembly of Claim 1, wherein the at least one projection extend outward from the first surface of the cap plate a first distance and wherein the opening in at least one lead assembly has a depth that is selected so as to be substantially equal to or greater than the height of the at least one projection and wherein frictional engagement between the at least one projection and the inner walls of the openings in the at least one lead assembly couples the protection circuit module to the cap plate.

4. The assembly of Claim 1, wherein the at least one projection and the opening in the at least one lead assembly is hexagonal in shape.

5. The assembly of Claim 1, wherein the cap plate defines a first surface and wherein the at least one projection is fixedly attached to the first surface of the cap plate so as to define a fixed first region adjacent the first surface of the cap plate and a fixed second region greater than the first region wherein the first region is interposed between the second region and the cap plate so that at least one recess is formed between the second region and the first surface of the cap plate.

6. The assembly of Claim 5, wherein the opening in the at least one lead assembly is contoured so that the at least one lead assembly is positionable in the at least one recess so that the interaction between the second region of the at least one projection.

7. The assembly of Claim 6, wherein the first and second regions of the projection define a T-shaped cross section with two recesses and wherein the opening in the at least one assembly defines a partially enclosed opening with two sides so that the two sides can be positioned in the recess with the first region of the at least one projection positioned within the partially enclosed opening.

8. The assembly of Claim 7, wherein the second region of the at least one projection is either hexagonal or disk shaped.

9. The assembly of Claim 1, wherein the at least one projection formed of a deformable material so that the at least one projection extend through the opening in the at least one lead assembly and includes a portion that is deformed to overlie a region of the at least one lead assembly adjacent the opening so as to couple the lead assembly to the cap plate.

10. The assembly of Claim 9, wherein an outer surface of the at least one lead assembly is contoured in an area immediately adjacent the opening so as to define a reduced thickness area of the at least one lead assembly such that the at least one projection is deformed so as to fill the reduced thickness area.

11. The assembly of Claim 1, wherein the at least one projections are formed of the same material as the cap plate.

## Patentansprüche

1. Batterieanordnung (10), aufweisend:
eine blanke Zelle (10), die eine Abdeckplatte (3300) aufweist, die zumindest einen Vorsprung (3310) aufweist;
ein Schutzschaltungsmodul (4000), das an der Abdeckplatte angebracht ist, wobei das Schutzschaltungsmodul zumindest eine Leitungsanordnung aufweist, die mit dem Schutzschaltungsmodul gekoppelt ist, und wobei die zumindest eine Leitungsanordnung eine Öffnung (4310a) definiert, die derart dimensioniert ist, dass sie den zumindest einen Vorsprung aufnimmt, der sich von der Abdeckplatte nach außen erstreckt, so dass der Eingriff zwischen den Öffnungen der zumindest einen Leitungsanordnung und des zumindest einen Vorsprungs das Schutzschaltungsmodul in einer Abstandsbeziehung an der Abdeckplatte festhält, wobei der zumindest eine Vorsprung einen ersten und einen zweiten Vorsprung aufweist und die zumindest eine Leitungsanordnung eine erste und eine zweite Leitungsanordnung aufweist, die jeweils eine Öffnung aufweisen, die jeweils den ersten und zweiten Vorsprung aufnimmt, und wobei die erste und/oder die zweite Leitungsanordnung das Schutzschaltungsmodul elektrisch mit der Abdeckplatte koppeln/koppelt; und
einen leitfähigen Kleber, der zwischen dem Vorsprung der Abdeckplatte und der Öffnung in der Leitungsanordnung aufgetragen wird.

2. Anordnung nach Anspruch 1, wobei sich der zumindest eine Vorsprung von der ersten Oberfläche der Abdeckplatte in einem ersten Abstand nach außen erstreckt, und wobei die Öffnung in der zumindest einen Leitungsanordnung eine Tiefe aufweist, die derart ausgewählt ist, dass der zumindest eine Vorsprung aus den Öffnungen hervorragt, und wobei ein Reibschluss zwischen dem zumindest einen Vorsprung und den Innenwänden der Öffnungen in der zumindest einen Leitungsanordnung das Schutzschaltungsmodul mit der Abdeckplatte koppelt.

3. Anordnung nach Anspruch 1, wobei sich der zumindest eine Vorsprung von der ersten Oberfläche der Abdeckplatte in einem ersten Abstand nach außen erstreckt und wobei die Öffnung in zumindest einer Leitungsanordnung eine Tiefe aufweist, die derart ausgewählt ist, dass sie im Wesentlichen gleich der oder größer als die Höhe des zumindest einen Vorsprungs ist, und wobei ein Reibschluss zwischen dem zumindest einen Vorsprung und den Innenwänden der Öffnungen in der zumindest einen Leitungsanordnung das Schutzschaltungsmodul mit der Abdeckplatte koppelt.

4. Anordnung nach Anspruch 1, wobei der zumindest eine Vorsprung und die Öffnung in der zumindest einen Leitungsanordnung eine hexagonale Form aufweist.

5. Anordnung nach Anspruch 1, wobei die Abdeckplatte eine erste Oberfläche definiert und wobei der zumindest eine Vorsprung an der ersten Oberfläche der Abdeckanordnung fixiert ist, so dass eine feste erste Region benachbart zur ersten Oberfläche der Abdeckplatte und eine feste zweite Region, die größer als die erste Region ist, definiert wird, wobei die erste Region zwischen der zweiten Region und der Abdeckplatte angeordnet ist, so dass zumindest eine Aussparung zwischen der zweiten Region und der ersten Oberfläche der Abdeckplatte ausgebildet ist.

6. Anordnung nach Anspruch 5, wobei die Öffnung in der zumindest einen Leitungsanordnung derart konturiert ist, dass die zumindest eine Leitungsanordnung in der zumindest einen Aussparung positionierbar ist, so dass die Interaktion zwischen der zweiten Region des zumindest einen Vorsprungs.

7. Anordnung nach Anspruch 6, wobei die erste und zweite Region des Vorsprungs einen T-förmigen Querschnitt mit zwei Aussparungen definieren, und wobei die Öffnung in der zumindest einen Anordnung eine teilweise umschlossene Öffnung mit zwei Seiten aufweist, so dass die zwei Seiten in der Aussparung positioniert werden können, wobei die erste Region des zumindest einen Vorsprungs in der teilweise umschlossenen Öffnung positioniert ist.

8. Anordnung nach Anspruch 7, wobei die zweite Region des zumindest einen Vorsprungs entweder hexagonal oder scheibenförmig ist.

9. Anordnung nach Anspruch 1, wobei der zumindest eine Vorsprung aus einem verformbaren Material ausgebildet ist, so dass sich der zumindest eine Vorsprung durch die Öffnung in der zumindest einen Leitungsanordnung erstreckt und einen Abschnitt aufweiset, der derart verformt ist, dass er eine Region der zumindest einen Leitungsanordnung überlagert, die benachbart zur Öffnung ist, so dass die Leitungsanordnung mit der Abdeckplatte gekoppelt wird.

10. Anordnung nach Anspruch 9, wobei eine Außenfläche der zumindest einen Leitungsanordnung in einem zu der Öffnung direkt benachbarten Bereich konturiert ist, so dass sie einen Bereich mit reduzierter Dicke der zumindest einen Leitungsanordnung derart definiert, dass der zumindest eine Vorsprung derart verformt wird, dass er den Bereich mit reduzierter Dicke ausfüllt.

11. Anordnung nach Anspruch 1, wobei der zumindest eine Vorsprung aus dem gleichen Material wie die Abdeckplatte ausgebildet ist.

## Revendications

1. Ensemble de batterie (10), comprenant :
une cellule nue (100) comportant une plaque de capuchon (3300) qui comprend au moins une saillie (3310) ;
un module de circuits de protection (4000) monté sur la plaque de capuchon, le module de circuits de protection comprenant au moins un ensemble de conducteurs qui est couplé au module de circuits de protection, et l'au moins un ensemble de conducteurs définissant une ouverture (4310a) qui est dimensionnée de façon à recevoir la au moins une saillie qui s'étend vers l'extérieur à partir de la plaque de capuchon de telle sorte que la prise entre les ouvertures de l'au moins un ensemble de conducteurs et la au moins une saillie maintienne le module de circuits de protection par rapport à la plaque de capuchon dans une relation espacée,
dans lequel la au moins une saillie comprend une première et une deuxième saillies, et le au moins un ensemble de conducteurs comprend un premier et un deuxième ensembles de conducteurs, comportant chacun une ouverture qui reçoit les première et deuxième saillies, respectivement, et au moins l'un des premier et deuxième ensembles de conducteurs couplant électriquement le module de circuits de protection à la plaque de capuchon ; et
un adhésif conducteur qui est appliqué entre la saillie de la plaque de capuchon et l'ouverture dans l'ensemble de conducteurs.

2. Ensemble selon la revendication 1, dans lequel la au moins une saillie s'étend vers l'extérieur à partir de la première surface de la plaque de capuchon d'une première distance, et dans lequel l'ouverture dans le au moins un ensemble de conducteurs a une profondeur qui est sélectionnée de telle sorte que la au moins une saillie s'étende hors des ouvertures, et dans lequel la prise de frottement entre la au moins une saillie et les parois intérieures des ouvertures dans le au moins un ensemble de conducteurs couple le module de circuits de protection à la plaque de capuchon.

3. Ensemble selon la revendication 1, dans lequel la au moins une saillie s'étend vers l'extérieur à partir de la première surface de la plaque de capuchon d'une première distance, et dans lequel l'ouverture dans au moins un ensemble de conducteurs a une profondeur qui est sélectionnée de façon à être sensiblement supérieure ou égale à la hauteur de la au moins une saillie, et dans lequel la prise de frottement entre la au moins une saillie et les parois intérieures des ouvertures dans le au moins un ensemble de conducteurs couple le module de circuits de protection à la plaque de capuchon.

4. Ensemble selon la revendication 1, dans lequel la au moins une saillie et l'ouverture dans le au moins un ensemble de conducteurs sont de forme hexagonale.

5. Ensemble selon la revendication 1, dans lequel la plaque de capuchon définit une première surface, et dans lequel la au moins une saillie est attachée de façon fixe à la première surface de la plaque de capuchon, de façon à définir une première région fixe au voisinage de la première surface de la plaque de capuchon et une deuxième région fixe plus grande que la première région, la première région étant interposée entre la deuxième région et la plaque de capuchon, de telle sorte qu'au moins une cavité soit formée entre la deuxième région et la première surface de la plaque de capuchon.

6. Ensemble selon la revendication 5, dans lequel l'ouverture dans le au moins un ensemble de conducteurs a un certain contour, de telle sorte que le au moins un ensemble de conducteurs puisse être positionné dans la au moins une cavité, de telle sorte que l'interaction entre la deuxième région de la au moins une saillie.

7. Ensemble selon la revendication 6, dans lequel les première et deuxième régions de la saillie définissent une section transversale en forme de T avec deux cavités, et dans lequel l'ouverture dans le au moins un ensemble définit une ouverture partiellement enclose avec deux côtés, de telle sorte que les deux côtés puissent être positionnés dans la cavité avec la première région de la au moins une saillie positionnée à l'intérieur de l'ouverture partiellement enclose.

8. Ensemble selon la revendication 7, dans lequel la deuxième région de la au moins une saillie est soit hexagonale soit en forme de disque.

9. Ensemble selon la revendication 1, dans lequel la au moins une saillie est constituée par un matériau déformable, de telle sorte que la au moins une saillie s'étende à travers l'ouverture dans le au moins un ensemble de conducteurs et comprenne une partie qui est déformée de façon à recouvrir une région de l'au moins un ensemble de conducteurs adjacente à l'ouverture, de façon à coupler l'ensemble de conducteurs à la plaque de capuchon.

10. Ensemble selon la revendication 9, dans lequel une surface extérieure du au moins un ensemble de conducteurs a un certain contour dans une zone immédiatement au voisinage de l'ouverture de façon à définir une zone d'épaisseur réduite du au moins un ensemble de conducteurs, de telle sorte que la au moins une saillie soit déformée de façon à remplir la zone d'épaisseur réduite.

11. Ensemble selon la revendication 1, dans lequel les au moins une saillies sont constituées par le même matériau que la plaque de capuchon.
